# FASCICULE DE BREVET EUROPEEN

(11) **EP 0 666 158 B1**
(45) Date de publication et mention de la délivrance du brevet: **05.08.1998**
(21) Numéro de dépôt: 95430003.4
(22) Date de dépôt: 27.01.1995
(51) Int. Cl.: B29C 44/38, B29C 33/36

(54) **Procédé et dispositif de fabrication d'éléments de coussins ou de matelas en matière cellulaire souple**
Verfahren und Vorrichtung zum Herstellen von Polster- oder Matratzenelementen aus weichem, zellularen Material
Process and apparatus for manufacturing cushions or mattresses of soft cellulaire material

(30) Priorité: 04.02.1994 FR 9401538
(43) Date de publication de la demande: 09.08.1995
(73) Titulaire: ASKLE, F-30000 Nîmes (FR)
(72) Inventeur: Benguigui, Paul, F-30000 Nimes (FR); Sebag, Albert, F-30000 Nimes (FR)
(74) Mandataire: Somnier, Jean-Louis

(56) Documents cités:
- EP-A- 0 114 762
- EP-A- 0 386 818
- US-A- 3 247 295
- US-A- 4 215 730
- US-A- 4 532 093

## Description

La présente invention a pour objet des procédés et dispositifs de fabrication d'éléments de coussins ou de matelas en matière cellulaire souple.

Le secteur technique de l'invention est celui de la réalisation de coussins et de matelas pour recevoir des personnes assises ou couchées.

Une des applications principales de l'invention est la fabrication de tels coussins ou matelas à usage médical, pour aider à prévenir les escarres.

On connaît en effet de tels coussins ou matelas, dont certains, et la présente invention concerne cette catégorie, sont réalisés en matière cellulaire souple, soit essentiellement de la mousse à cellules ouvertes de type polyuréthane, et ayant une forme particulière, qui permet d'une part, de répartir la pression d'appui du corps qu'ils reçoivent, d'une manière uniforme, afin d'éviter des points de contact plus sollicités que d'autres, et sur lesquels pourraient se développer des escarres, et d'autre part, d'autoriser de légers déplacements par déformation latérale, sans générer de frottement.

Pour cela, une telle forme communément utilisée depuis longtemps est de type gaufrier, comportant une semelle continue, de laquelle dépassent des plots en forme de troncs de pyramide, et répartis uniformément sur toute la surface d'appui souhaitée.

Différentes normes existent dans certains pays, pour définir les caractéristiques minimum de tels coussins ou matelas telle que celle en FRANCE établie par la Direction Générale de la Santé, avec en particulier une épaisseur minimum de 17 cm, dont 8 au moins pour la semelle, une densité de mousse comprise entre 24 et 45 kg/m3, une déformation rémanente inférieure à 10% selon la norme ISO 1856, des qualités techniques d'élasticité, de résistance à la compression et de longévité au moins identiques à celles obtenues avec les mousses à haute résilience, un comportement au feu selon la norme NF P926501, une résistance au déchirement supérieur à 170 N/m suivant la norme NF T56109.

Ainsi, pour satisfaire ces normes qui du reste évoluent et deviennent de plus en plus sévères, ou pour proposer des coussins éventuellement du reste hors normes mais avec des caractéristiques additionnelles, divers fabricants ont développé :
- soit divers composants pour obtenir une mousse correspondant aux caractéristiques ci-dessus, soit divers types de protections imperméables, essentiellement par housse amovible ou projection de peinture rajoutée après fabrication de la mousse;
- soit divers procédés de mise en oeuvre de la mousse, pour obtenir l'effet gaufrier par découpage d'un bloc ou par prémoulage de celui-ci;
- soit des combinaisons de ladite mousse avec d'autres matériaux et/ou autres dispositifs complémentaires.

Certains de ces développements ont fait du reste l'objet chacun pour une caractéristique spécifique d'une demande de brevet. On peut citer par exemple les demandes françaises FR. 2.646.772 publiée le 16 Novembre 1990 de MM. DUTSCHER et WACKERMANN sur un "matelas perfectionné anti-escarres à bordures longitudinales de protection et de retenue", la demande FR. 2.630.644 publiée le 03.11.1989 de la S.A.R.L. LABORATOIRES ESCARIUS sur un "coussin et matelas anti-escarres à usage médical", la demande FR. 2.510.377 publiée le 04.02.1983 de la société suédoise TIMMELE LAMINERING AB sur un "corps élastique recouvert d'une couche protectrice".

De même, on relève les demandes européennes EP 114.762 publiée le 01.08.1984 de la société SUPPORT SYSTEMS INTERNATIONAL sur un "matelas utilisable à des fins thérapeutiques, notamment pour éviter la formation d'escarres lors d'un alitement prolongé d'un patient" et qui porte spécifiquement sur un matelas de type gaufrier, mais dont la mousse qui le constitue est constituée de trois couches de matériau cellulaire superposées, ayant une résistance à la compression croissante depuis la surface de contact des plots jusqu'à la semelle; et la demande EP 135.771 publiée le 03.04.1985 de la société BAYER AG sur un "coussin dont l'intérieur est en mousse et avec une housse perméable à l'air", et qui décrit un procédé de fabrication à partir d'un matériau de revêtement colmaté de façon étanche à la mousse, dans lequel est injectée celle-ci, puis dont on détruit une partie du colmatage pour la rendre perméable à l'air.

Toutes ces publications et d'autres décrivent donc diverses possibilités de réaliser et d'obtenir, soit des caractéristiques telles que fixées par certaines normes comme celles en FRANCE citées ci-dessus, soit des perfectionnements aux coussins ou matelas, tant dans leur forme que dans leur composition ou leur protection, mais aucune n'enseigne ni ne suggère un procédé de fabrication complet permettant en particulier une automatisation de celle-ci, tout au moins pour obtenir des coussins ou matelas par prémoulage de la forme voulue, qui est un des objectifs de la présente invention. Pourtant une telle automatisation permettrait d'obtenir plus sûrement, des produits uniformes dans leur qualité et cela d'autant plus avec les nouvelles contraintes de ne plus utiliser de mousse expansée à gaz propulseur type chlorofluorocarbure (CFC), mais des mousses à l'eau dont la mise en oeuvre est beaucoup plus délicate et n'admet pas de variation dans les conditions opératoires ; d'autre part, l'automatisation permet une capacité de production importante dans un faible espace et avec un minimum de main d'oeuvre.

Ainsi à ce jour, la coulée ou l'injection de la mousse dans un moule est effectuée souvent manuellement, ce qui prend du temps, et ne permet pas une répartition uniforme des composants permettant de réaliser la mousse dans le moule, créant alors des variations de densité du matériau lors de l'expansion de celui-ci une fois le moule refermé et dans le cas de mousse à l'eau, ne permet pas une bonne expansion de celle-ci.

Certes, on connaît des procédés et dispositifs proposant une certaine automatisation. Le brevet US-A-4532093 de Monsieur O'MALLEY, par exemple, décrit un procédé et un dispositif pour la fabrication d'emballages moulés en mousse, à l'aide d'une tête d'injection déplacée par un moyen mécanique automatique au-dessus d'un moule pour assurer une certaine répartition de la mousse dans celui-ci, le dispositif formant le préambule de la revendication indépendante de dispositif 5. Cependant, l'enseignement du brevet US-A-4532093 conduit aux constations suivantes : le trajet de la tête est très limité et ne permet donc pas une véritable répartition contrôlée dans tout le moule ; le démoulage se fait grâce à une housse qui est mise à la main préalablement à l'injection, puis enlevée, ce qui est peu pratique et ralentit les opérations ; le carrousel circulaire utilisé ne comporte que deux postes et emplacements de moule ; et par ailleurs, rien n'est précisé, ni décrit, ni évoqué pour traiter spécifiquement les problèmes, d'une part du moulage d'objets tels que les coussins ou matelas composés de plots adjacents tels qu'en forme de troncs de pyramides solidaires d'une seule semelle commune, et d'autre part de la mise en oeuvre très délicate des mousses à l'eau.

En effet, les mousses polyuréthanes ont besoin d'un gaz propulseur pour constituer leurs cellules ouvertes et jusqu'à présent, les gaz utilisés pour cela étaient des alcanes ou hydrocarbures halogénés, essentiellement fluorés, dont un des plus connus est celui portant la marque déposée "FREON" de DU PONT DE NEMOURS, et des chlorofluorocarbures dits CFC : de tels gaz sont cependant à présent considérés nocifs et progressivement interdits.

Une solution connue pour réaliser les mousses à cellules ouvertes est de remplacer ce gaz propulseur par de l'eau qui est mélangée préalablement dans un des composants de base, soit par exemple comme décrit ci-après, le polyol, et qui, lors de la réaction chimique avec l'autre composant, qui est de préférence par exemple de l'isocyanate, produit un effet exothermique supérieur à 80°C : l'eau est alors évaporée et par réaction chimique secondaire, crée du dioxyde de carbone, formant par le gaz ainsi produit, les cellules ouvertes de la mousse.

Cependant, une telle réaction est plus lente qu'avec les gaz CFC, ce qui nécessite un temps d'attente de démoulage plus grand, pendant lequel la pression d'expansion produite peut être de 450 grammes par centimètre carré, soit équivalente à celle d'expansion de la mousse avec CFC mais, suivant les formulations, peut monter jusqu'à 650 à 750 grammes par centimètre carré, soit le double de celle produite avec les gaz CFC ; la température du moule doit également être supérieure de 15°C minimum par rapport à celle nécessaire avec ces derniers, et d'une part ne peut pas être entretenue par la seule réaction exothermique du produit lui-même, d'autre part doit être maintenue dans une plage très stricte de 58 à 62°C et de préférence 60°C, dont dépendent la qualité de l'expansion et donc de la mousse terminée ; par ailleurs, comme indiqué précédemment, la répartition du produit dans le moule doit être très précise, et suivant un tracé rigoureusement défini, et qui doit être toujours le même, sous peine d'avoir des variations de consistance de la mousse et des cellules hétérogènes, tant au niveau de leur diamètre que de leur répartition, ce qui rendrait les matelas ou coussins ainsi réalisés inutilisables.

Par ailleurs, pour des facilités de nettoyage et de préservation des matelas contre les taches, il est souvent rajouté un système de protection externe imperméabilisé, qui peut être le rajout d'une housse imperméable, qui entre autres, peut cependant gêner la déformation des plots et donc leur efficacité de répartition de pression, et être à l'origine de bruits et de frottement, et de toutes façons n'empêche pas complètement la mousse d'être tachée quand même ; aussi, il a été envisagé de rajouter après fabrication, une pellicule de protection imperméable et adhérente à celle-ci :
- soit par immersion des éléments de matelas ou de coussins dans des bains tel que de caoutchouc naturel mais nécessitant des manutentions, des manipulations et des contrôles d'épaisseur, ce qui grève le coût du produit fini;
- soit par projection de peinture, mais il est alors d'une part impossible de bien protéger les parties en creux qui sont pourtant les plus exposées au déchirement et difficiles d'accès pour le nettoyage, et d'autre part, par des procédés manuels, la couche projetée ne peut pas être uniforme, ce qui en cas de surépaisseur modifie la souplesse de surface recherchée et, en cas d'épaisseur trop faible, ne protège pas assez celle-ci, et dans tous les cas crée des zones de couleurs différentes, donc inesthétiques.

Ainsi les objectifs de la présente invention sont de développer un procédé, et un dispositif pour la mise en oeuvre de ce dernier, de fabrication de tels éléments de coussins et de matelas en matière cellulaire souple, tel que de la mousse de polyuréthane, de préférence expansée à l'eau et prémoulée à la forme voulue, permettant essentiellement :
- une automatisation de cette fabrication en toute sécurité, respectant les contraintes propres de mise en oeuvre des composants pour réaliser ladite mousse;
- d'obtenir des caractéristiques de celle-ci qui soient d'une part conformes aux normes, et d'autre part optimum pour un confort maximum et de qualité constante et répétitive;
- d'assurer une cadence de fabrication élevée, avec un minimum de moules;
- la projection d'une peinture imperméable, assurant une protection effective minimum des éléments de coussins ou de matelas, sans perturber les caractéristiques de confort de ceux-ci, ni l'homogénéité de leurs couleurs.

Ces objectifs sont atteints avec un procédé de fabrication d'éléments de coussins et de matelas réalisés de manière connue en matière cellulaire souple à cellules ouvertes, par la coulée dans un moule, à partir d'une tête assurant le mélange d'au moins deux composants de base, du produit ainsi formé et qui par réaction de ses composants, s'expanse et remplissant tout le volume dudit moule constitue ladite matière cellulaire; suivant l'invention :
- on dispose sur un carrousel circulaire au moins cinq emplacements de moules répartis uniformément à raison alors de 1/5ème de la circonférence dudit carrousel pour chacun et comportant plusieurs alvéoles creuses débouchant à leur partie supérieure dans un volume commun permettant de constituer une semelle continue desdits coussins et matelas ;
- on transfère automatiquement, successivement et horizontalement par ledit carrousel, lesdits moules depuis un poste de préparation où on projette sur toute leur surface un agent démoulant, pour les présenter sous ladite tête ;
- on déplace par tout moyen mécanique ladite tête au-dessus de chaque moule suivant un tracé continu couvrant au moins toutes les alvéoles de celui-ci à une vitesse variable suivant les parties du tracé et assurant, d'une part, pour un débit donné de coulée du produit, une répartition voulue de celui-ci dans chaque alvéole, et d'autre part, un temps total de parcours du tracé inférieur au temps d'expansion maximum du produit projeté en début de ce tracé ;
- on ferme un couvercle sur chacun des moules, après la fin du parcours de la tête sur le tracé et on le maintient par tout moyen compensant l'effort de la pression d'expansion interne de la mousse ; on peut assurer en même temps au moins par quelques évents une communication contrôlée du volume interne avec l'extérieur, pour que l'air puisse s'échapper sans risquer de faire collapser la mousse ; on transfère alors automatiquement par ledit carrousel le moule ainsi fermé vers des postes d'attente successifs où il demeure ainsi pendant un temps au moins égal ou de préférence supérieur à celui de la maturation de la matière cellulaire obtenue et pendant lequel on maintient la température du moule dans une plage donnée ;
- on ouvre ledit couvercle, on enlève l'élément de coussins ou matelas ainsi constitué et on vérifie la propreté du moule, puis on recommence les opérations ci-dessus pour réaliser un autre élément à partir du poste de préparation, qui peut être le même que celui où on enlève aussi les éléments terminés ou un autre poste distinct et situé juste après.

Afin d'obtenir la caractéristique d'imperméabilisation, après le poste de projection de l'agent démoulant, et avant le transfert du moule sous la tête de coulée, on déplace ce moule automatiquement par ledit carrousel vers un poste, où on projette uniformément sur toute sa surface une peinture imperméable, sur laquelle la matière cellulaire souple obtenue par expansion du produit pourra adhérer.

A ce poste de travail de projection de peinture imperméabilisée, et dans un mode préférentiel de réalisation, le dispositif suivant l'invention comporte une rampe de projection parallèle et de longueur égale au moins à l'un des côtés du moule, comprenant des buses réparties sur toute sa longueur, et déplacées d'une manière régulière et uniforme perpendiculairement audit côté.

Pour automatiser les différentes phases du procédé ci-dessus :
- on équipe le carrousel de transfert de moules et les équipements mécaniques assurant les différentes opérations de déplacement de tout dispositif mobile, ainsi que de coulée, de recyclage, de stockage des composants et de tout produit à projeter, de capteurs de mesure physique et de position, que l'on relie à au moins un automate de commande des divers équipements concernés;
- on programme ledit automate pour assurer les opérations de fabrication concernant au moins le déplacement et le transfert du moule entre chaque poste de travail en respectant les temps minima imposés entre chaque poste, et la coulée du produit en respectant le temps maximum imposé, d'une manière automatique et continue.

Le résultat est de nouveaux procédés et dispositifs de fabrication d'éléments de coussins ou de matelas en matière cellulaire souple, satisfaisant aux objectifs définis é ci-dessus, et apportant un certain nombre d'avantages par rapport aux techniques connues à ce jour.

En particulier, l'automatisation du déplacement et de la manutention de la tête de coulée au-dessus du moule permet, en contrôlant son parcours et en faisant varier la vitesse de cette tête, de bien répartir le produit sur l'ensemble de la surface du moule et en déposant dans chaque alvéole la quantité exactement nécessaire, même si les alvéoles sont de dimensions différentes, surtout en périphérie de l'élément de coussin ou de matelas, afin d'avoir par exemple une densité homogène partout ou au contraire variable mais contrôlée : ceci est très important pour de telles formes de moule en gaufrier inversé qui comportent beaucoup de réceptacles isolés les uns des autres, et qu'il est donc impossible de contrôler visuellement et manuellement du fait de la réaction et de la montée assez rapide de ladite mousse au fur et à mesure de son coulage, ce qui ne permet pas habituellement de savoir la quantité qui a pu être déversée; de plus, il est nécessaire de pouvoir terminer le parcours complet du tracé recouvrant l'ensemble de la surface du moule dans un temps très réduit, soit ainsi par exemple de moins de 20 secondes pour près de 7 mètres de tracé, car la mousse arrive au niveau supérieur du moule, soit au niveau de la semelle de l'élément qui est en effet positionné à l'envers dans le moule, et qui a une hauteur de 17 cm tel que cela est fixé dans les normes françaises, en douze secondes environ, avec une mousse au gaz propulseur CFC et 25 secondes environ en mousse à l'eau, et il faut avoir le temps de pouvoir refermer le couvercle avant l'échéance de cette durée, soit en fait quand la mousse atteint seulement le bord des alvéoles. Or comme une tête de coulée peut représenter un poids de l'ordre de 40 kg, une telle manoeuvre avec des vitesses de 0,70 mètre par seconde et de multiples changements de direction, n'est possible à réaliser dans de bonnes conditions de mise en oeuvre qu'avec une bonne maîtrise et connaissance du tracé et justement une automatisation complète.

Ainsi, la maîtrise et la connaissance exacte du tracé parcouru par ladite tête de la vitesse de celle-ci et du débit du produit injecté, permettent de maîtriser d'une façon parfaite la densité de la mousse obtenue, en fonction du volume des alvéoles et du moule, qui est de préférence choisie dans la gamme maximum autorisée, soit entre 40 et 42 kg/m3 d'une façon optimum pour avoir à la fois une bonne assise et une bonne déformation de la mousse : le procédé suivant l'invention permet d'obtenir une telle densité avec moins de 0,5% de variation pour chaque élément de coussin ou matelas réalisé.

Par ailleurs, on peut alimenter de préférence dans la présente invention ladite tête de coulée en composants de base par au moins deux circuits indépendants dans lesquels lesdits composants sont recyclés en boucle continue depuis des réservoirs de stockage quand on arrête la coulée du produit; on peut ainsi contrôler d'une façon très précise la pression, la température et le débit exact de chaque composant pour obtenir un dosage et donc un mélange optimum, surtout avec les compositions utilisées, de préférence dans la présente invention, telles que : un mélange de 100 particules d'une préparation à base de polyol, dont la viscosité est de l'ordre de 1.300 mPa.s, avec 36 particules minimum et 50 au mieux d'une préparation à base de diisocyanate, dont la viscosité est seulement de l'ordre de 7 mPa.s.

Le choix d'un tel mélange, grâce au procédé de la présente invention est d'autant plus intéressant qu'il permet d'utiliser un mélange à expansion à l'eau, qui se trouve dans la préparation polyol, et n'utilisant donc pas, comme dans la plupart des mousses à ce jour, du chlorofluorocarbure (CFC), qui est de plus en plus éliminé et condamné. La grande différence de viscosité entre ces deux composants, rend cependant difficile l'obtention d'un bon mélange ; pour cela, on utilise alors : soit des alimentations en basse pression de la tête d'injection disposant alors d'un rotor de brassage de type à peignes, tournant dans une chambre dans laquelle sont introduits les composants ; soit deux alimentations haute pression, une pour chaque composant, débouchant dans une chambre de mélange de la tête à 160 bars minimum et de préférence 180 bars, et disposées face à face à 180° l'une de l'autre, assurant alors le mélange par heurt des produits entre eux ; cette deuxième solution permet, d'une part une meilleure qualité du mélange malgré les différences de viscosité, et d'autre part une simplification du nettoyage par un simple piston racleur qui est déplacé dans la chambre de mélange après chaque injection et à intervalles réguliers entre deux injections, alors qu'avec une tête basse pression équipée d'un peigne, il faut la nettoyer avec un produit additionnel, ce qui en complique la mise en oeuvre.

En ce qui concerne la peinture imperméable, il peut être également utilisé dans le procédé suivant l'invention, une peinture polyuréthane monocomposant à solution aqueuse, dont l'évaporation est assez rapide, et qui nécessite un minimum de l'ordre de 60 secondes de séchage.

La projection de peinture dans le fond du moule avant la coulée de la mousse, permet :
- d'une part, de déposer un film régulier contrôlable sur tout le fond de ce moule, grâce en particulier à un dispositif décrit précédemment tel qu'une rampe de projection parallèle et de même longueur que l'un des côtés d'un moule;
- et d'autre part, de projeter plus de peinture au niveau des parties du moule correspondant aux creux des éléments de matelas ou de coussins, qui sont donc saillants, et qui reçoivent une légère surcharge à cet endroit, où justement les plots ensuite formés sont les plus sollicités; la peinture participe ainsi à la résistance au déchirement de ceux-ci, même si son épaisseur ne fait que quelques microns, ce qui n'est pas possible d'obtenir avec une peinture projetée après coup.

La possibilité d'utiliser une peinture en solution aqueuse permet une diffusion en basse pression inférieure à 4 bars, donc sans brouillard, et limitant les pertes par diffusion de la peinture, ni écrasement et effet de poudrage, ni de renvoi par rebond du produit contre le moule, ce qui limite d'autant plus la perte du produit et assure une régularité de projection parfaite et uniforme sur toute la surface.

Le choix minimum suivant l'invention de cinq emplacements de moules disposés régulièrement en couronne sur un carrousel circulaire permet, avec un temps d'arrêt après chaque pas de rotation d'un cinquième de tour correspondant à la présentation de chaque moule successivement à chaque poste de travail, de 60 secondes minimum et en fait 120 secondes dans le cas de la mousse à l'eau, y compris le temps de transfert entre chaque pas de rotation, de respecter les différents temps d'attente nécessaires entre chacun de ces postes de travail correspondant à certaines phases du procédé, à savoir :
- après la phase de coulée qui prend donc entre 12 et 25 secondes par exemple suivant la mousse utilisée, comme indiqué précédemment, et la fermeture du couvercle du moule, d'attendre ensuite, comme les deux autres secteurs de rotation suivants ne correspondent à aucun poste de travail, de l'ordre de trois fois 120 secondes moins le temps d'injection au premier poste de 20 à 30 secondes, soit 330 à 340 secondes donc, ce qui est le temps juste minimum nécessaire pour obtenir la maturité de la mousse à l'eau, à savoir sa réticulation et sa montée en moussage dans tout le volume, puis son séchage jusqu'à ce qu'elle ne colle pas : ceci se fait donc en trois positions du carrousel, avant d'ouvrir le couvercle et présenter le moule en sa quatrième position angulaire ou secteur de rotation par rapport à celle ou celui de la coulée;
- après l'ouverture du couvercle, on peut alors enlever l'élément fabriqué, contrôler la qualité et la propreté du moule pendant moins de la moitié des 120 secondes correspondant à la durée de présence du moule à ce poste de travail ; durant le temps qui reste, on peut alors passer à ce même poste l'agent démoulant, qui ne prend que quelques secondes et qui nécessite un séchage de l'ordre d'un peu plus d'une minute, donc au total conforme à la durée de maintien du moule correspondant à ce poste; le passage de cet agent démoulant se fait à faible pression de l'ordre de 450 mb, ce qui a pour effet d'avoir une diffusion sans effet de sol, qui permet ainsi de déposer 85% du produit dans le moule avec un brouillard minimum;
- le cinquième secteur de rotation du carrousel correspond alors à la position du poste de projection de la peinture imperméable quand celle-ci est souhaitée, sachant que cette projection ne prend également que quelques secondes, mais nécessite un séchage également de l'ordre d'un peu plus d'une minute.

Grâce à la disposition du carrousel en cinq secteurs minimum correspondant à cinq emplacements de moules et cinq postes d'attente ou de travail tels que définis ci-dessus, on obtient ainsi un rendement optimum de fabrication avec une période de 120 secondes par pas de rotation pour de la mousse à l'eau, une production possible de 30 éléments par heure, en utilisant un minimum d'emplacements et de nombre de moules, et donc avec un encombrement du carrousel optimum.

Si on utilise de la mousse au gaz CFC par exemple, dont le temps de maturité est moindre, soit de 3 à 4 minutes ou 180 à 240 secondes, la rotation peut être accélérée avec seulement par exemple 105 à 110 secondes d'arrêt par poste, ce qui est compatible avec les caractéristiques des autres opérations définies ci-dessus et permettrait alors de produire de l'ordre de 32 à 34 éléments par heure. Cette même cadence de production peut être obtenue également pour la mousse à l'eau avec un carrousel à six emplacements au lieu de cinq, dont celui supplémentaire correspond à un troisième poste ou secteur de rotation d'attente de maturation de mousse entre le poste d'injection et celui de démoulage : on a alors un temps d'attente total de quatre fois 105 ou 110 secondes moins celui d'injection, soit 390 à 410 secondes, qui est bien suffisant et même plus sûr que celui de 330 ou 340 secondes avec cinq emplacements et un pas de 120 secondes.

Si on veut accélérer encore la production avec des mousses à l'eau dans et suivant d'autres modes de réalisation, on utilise un carrousel à huit ou neuf emplacements par exemple, s'il n'y a pas d'opération de projection de peinture imperméable : on dispose alors de cinq ou six positions ou secteurs d'attente, sans poste de travail, au lieu de deux pour le carrousel à cinq emplacements ou trois pour celui à six emplacements, permettant alors avec seulement 60 secondes d'arrêt par secteur d'assurer les 330/340 secondes d'attente minimum nécessaires ou 390 à 410 secondes de préférence, à la maturité de la mousse entre le poste d'injection et celui du démoulage ; il reste alors toujours une position entre ce poste de démoulage et d'évacuation de l'élément fabriqué et le poste d'injection du suivant, ne permettant alors au plus juste et après préparation par projection de l'agent démoulant au poste de démoulage que d'assurer son séchage, qui est de l'ordre d'une minute.

Si une opération de projection de peinture imperméable est à réaliser, il faut alors de préférence un carrousel de dix à douze emplacements pour disposer, en plus des postes et des secteurs d'attente définis pour un carrousel à huit ou neuf emplacements, d'une part du poste nécessaire à la projection de cette peinture et d'autre part du temps d'attente pour son séchage, soit donc au moins une autre position ou secteur. On peut alors doubler la production jusqu'à théoriquement soixante à soixante-huit éléments, réalisés en mousse à l'eau, par heure.

On pourrait citer d'autres avantages de la présente invention, mais ceux cités ci-dessus en montrent déjà suffisamment pour en démontrer la nouveauté et l'intérêt.

Des essais ont démontré la faisabilité des caractéristiques décrites ci-dessus et ci-après, et qui ont fait l'objet de recherches préalables pour trouver les solutions optimales et innovantes pour les objectifs définis, alors qu'aucun dispositif et procédé connu n'y parvient; ainsi personne jusqu'à ce jour n'a pu mettre en oeuvre l'ensemble des caractéristiques telles que combinées dans la présente invention, car justement celles-ci nécessitent des solutions spécifiques qui n'étaient pas évidentes.

La description et les figures ci-après représentent un exemple de réalisation de l'invention, mais n'ont aucun caractère limitatif : d'autres réalisations sont possibles dans le cadre de la portée et de l'étendue de cette invention.

La figure 1 est une vue d'ensemble de dessus d'un dispositif suivant l'invention et permettant de réaliser le procédé de l'invention avec six emplacements de carrousel.

La figure 2 est une vue de dessus détaillée d'un moule en forme de gaufre en position de coulée du produit moussant.

La figure 3 est une vue en coupe longitudinale du moule de la figure 2 dans le plan de la tête de coulée.

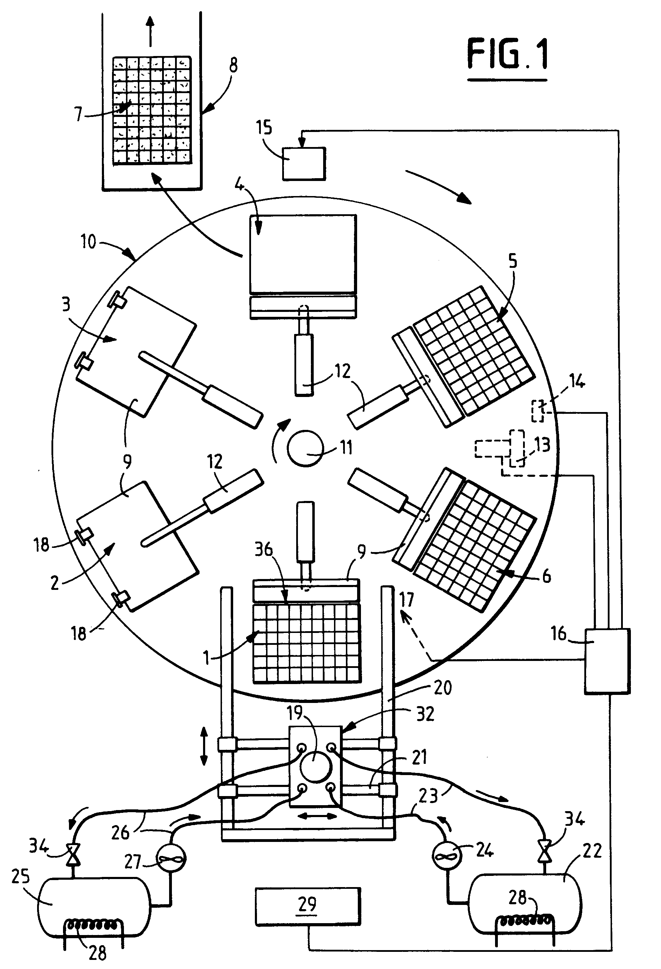

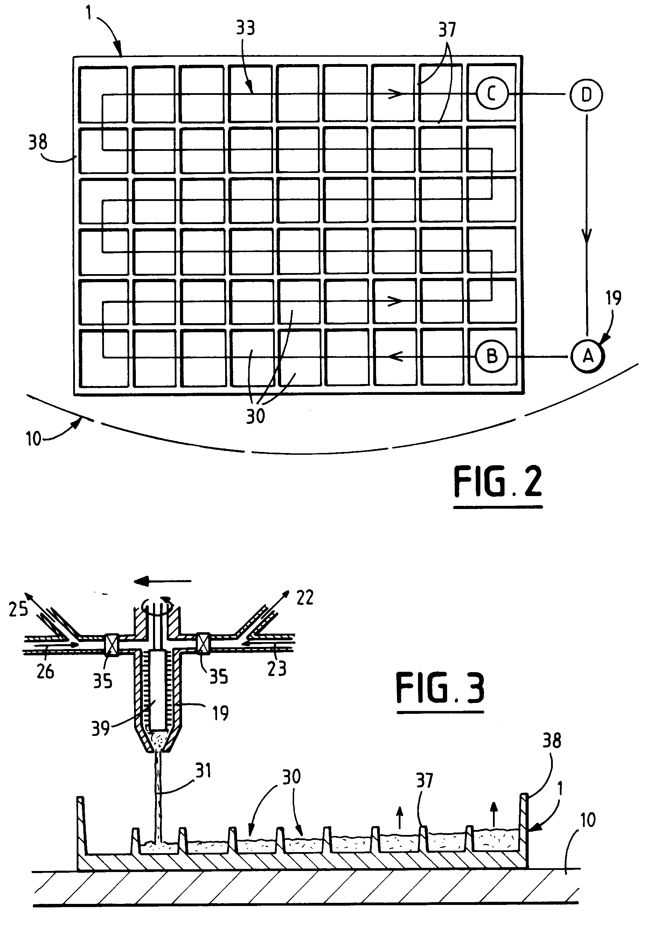

Des éléments 7 de coussins ou de matelas, tels que pouvant être réalisés par le dispositif de l'invention comme représenté sur la figure 1 et suivant le procédé de l'invention, sont décrits en introduction et connus à ce jour comme étant réalisés en matière cellulaire souple à cellule ouverte : cette matière est donc obtenue par la coulée d'un mélange d'au moins deux composants de base dans un moule 1 qui comporte plusieurs alvéoles 30 et donne la forme de ces éléments 7 tel que représenté sur les figures 2 et 3; la forme la plus communément utilisée est de type gaufrier comportant une semelle continue de laquelle dépassent des plots en forme de tronc de pyramide et répartis uniformément sur toute la surface d'appui souhaitée et donc représentés ici à l'envers lors du coulage dans le moule 1 sur la figure 3, à savoir les troncs de pyramide convergeant et orientés pointes vers le bas, et délimités latéralement par les cloisons 37 du moule 1 et la semelle étant formée en dernier au-dessus des cloisons 37, et entre les parois périphériques 38 du moule 1.

Le dispositif de fabrication des éléments 7 proprement dits comprend d'une manière connue, une tête 19 assurant ledit mélange et ladite coulée du produit 31 ainsi formé par mélange des deux composants de base et qui, par réaction de ces composants, s'expanse dans chaque alvéole 30 au fur et à mesure de la coulée, puis au-dessus, et remplit tout le volume dudit moule 1, constituant alors ladite matière cellulaire.

Selon l'invention, le dispositif de fabrication comporte en outre :
- un poste 5 de préparation où est projeté sur toute la surface du moule 1 un agent démoulant, comme décrit précédemment;
- un autre poste de travail 6, bien que ce poste ne soit pas toujours nécessaire, et que dans certains types de réalisation, il puisse ne pas être utilisé : à ce poste de travail 6, situé entre celui 5 de préparation pour la projection de l'agent démoulant, et celui 36 de la coulée du produit 31, est projetée uniformément sur toute la surface du moule 1 qui y est transféré une peinture imperméable sur laquelle la matière cellulaire souple, obtenue par expansion du produit 31, peut adhérer;
- un carrousel circulaire 10 assurant le transfert dudit moule 1 au moins entre le poste 5 de préparation et le poste 36 situé sous ladite tête 19 de coulée du produit 31, puis entre ce poste 36 de coulée du produit et un poste, 4 ou 5, où l'élément 7 de coussins ou de matelas ainsi réalisé peut être enlevé du moule 1 : ce poste de démoulage en effet peut être également celui de préparation 5, permettant de disposer d'un emplacement d'attente de maturité de mousse supplémentaire comme ceux précédents 2, 3 ; une fois ce moule libéré de l'élément 7, il est disponible pour effectuer un nouveau cycle de fabrication et le carrousel le déplace entre ce poste 4 ou 5 de projection de l'agent démoulant, et le poste 36 de coulée du produit 31 avec au passage éventuellement, le poste de travail 6 de projection de peinture imperméable.

Ledit carrousel 10 de transfert de moules entre les divers postes de travail 4, 5, 6, 36 est horizontal, tourne autour d'un axe central 11 vertical, et comprend pour permettre une continuité dans la fabrication des moules et donc une meilleure cadence de production, six emplacements correspondant, d'une part aux trois postes minimum 5, 36 et 4 définis ci-dessus, et trois autres emplacements dont au moins deux 2 et 3 ne sont pas associés à un poste de travail et sont situés entre le poste 36 de coulée du produit 31 et le poste 4 d'enlèvement de l'élément 7 de coussins ou de matelas. Ces postes 2 et 3 sont en fait des positions d'attente définies précédemment pendant lesquelles le produit s'expanse et occupe le volume total à l'intérieur du moule 1. Le troisième emplacement 6 disponible peut être alors, soit également un emplacement d'attente et de séchage de l'agent démoulant, soit associé à un poste de projection de peinture imperméable.

Chacun de ces emplacements du carrousel 10 est équipé d'un moule 1 et d'un couvercle 9, et ces emplacements sont disposés régulièrement en couronne pour que les moules qui s'y trouvent occupent en même temps au moins tous les postes considérés précédemment, puis l'un après l'autre lors de chaque pas de rotation dudit carrousel 10, afin de suivre le procédé de fabrication des éléments 7, tel que décrit précédemment.

Chaque moule est fermé par un couvercle 9 articulé autour d'un axe situé le long d'un côté de ce moule 1, et manoeuvré par exemple par au moins un vérin 12 situé vers le centre du carrousel; ces moyens de manoeuvre 12 des couvercles 9 qui ferment ceux-ci sur les différents moules 1, peuvent être associés à d'autres moyens 18 ou barres de fermeture manoeuvrées également par vérin et venant s'appuyer, verrouiller et bloquer le côté de l'ouverture des couvercles opposés à celui de leur articulation, afin de bien contenir la pression du produit qui s'expanse à l'intérieur des moules, surtout quand il s'agit de mousse à l'eau, dont nous avons donné les valeurs de pression précédemment.

Les couvercles 9 sont donc maintenus fixes pendant un temps au moins égal ou de préférence supérieur à celui de la maturation de la matière cellulaire obtenue qui correspond donc au temps d'attente aux postes 2 et 3, puis les réouvrent quand le moule correspondant arrive au poste d'enlèvement 4, à partir duquel l'élément 7 de coussin et de matelas terminé, est enlevé pour être posé par exemple sur un système 8 d'évacuation, de type tapis roulant, vers le stockage.

Au niveau du poste 36 de coulée du produit 31, le dispositif suivant l'invention comprend un moyen mécanique 20, 21 de déplacement de ladite tête de coulée 19 au-dessus du moule 1, qui se trouve en-dessous, suivant un tracé continu 33, tel que représenté sur la figure 2, couvrant au moins toute la surface de celui-ci et à une vitesse qui est en fait variable suivant les parties du tracé pour assurer, d'une part une répartition voulue du produit 31 avec un débit de coulée déterminé pour que la quantité de produit 31 déposée dans chaque alvéole 30 corresponde, une fois celui-ci expansé, au volume du plot et à la densité voulue de mousse correspondant et de la partie de semelle associés, et d'autre part, un temps total de parcours du tracé 33 inférieur au temps d'expansion maximum du produit projeté en début de ce tracé.

Dans un mode de réalisation et tel que représenté sur la figure 1, lesdits moyens mécaniques 20, 21 de déplacement de la tête de coulée 19, sont constitués de deux ensembles perpendiculaires d'au moins deux rails parallèles : un ensemble est fixe et recouvre le moyen de transfert 10 du moule 1 de part et d'autre de la position 36 de celui-ci, et l'autre ensemble motorisé par rapport au premier se déplace le long de celui-ci et porte lui-même ladite tête 19, qui peut être tenue par un support 32 et qui, également motorisé, se déplace longitudinalement par rapport à ce deuxième ensemble. Les deux ensembles mécaniques de déplacement peuvent être remplacés par un bras de robot.

Si on veut une densité constante de la mousse dans tout l'élément de coussin, on calculera la vitesse de déplacement de la tête 19 pour que la répartition du produit dans les alvéoles 30 soit uniforme, et si on veut au contraire des variations de densité, telles que plus denses en périphérie par exemple pour avoir une portance différente, et si l'injection se fait à débit et à pression constante, on ralentira la vitesse de déplacement de la tête au-dessus des alvéoles 30 concernées pour y déposer plus de produit sans avoir à modifier le débit d'alimentation des composants de base dans la tête ; on peut également faire l'inverse bien entendu.

Par contre, si on veut, en différents endroits du coussin, des duretés de mousse différentes et non pas simplement des variations de densité, donc avec des différences dans la composition du mélange, on dispose une deuxième tête. Et si on veut rajouter d'autres produits dans la composition du mélange, tels qu'un colorant et/ou de la mélamine pour avoir une meilleure résistance au feu, on rajoute un ou deux orifices d'alimentation correspondants, disposés perpendiculairement au plan de la Figure 3 et aux deux autres orifices des circuits d'alimentation 23 et 26 des composants de base, et qui débouchent dans le même plan horizontal que ceux-ci pour qu'ils se heurtent entre eux et se mélangent.

Selon l'invention, le dispositif de fabrication comporte en outre au moins deux circuits 23, 26 indépendants, dans lesquels lesdits composants nécessaires pour constituer la matière cellulaire, tels que le polyol et le diisocyanate, sont recyclés en boucles continues entre ladite tête de coulée 19 et des réservoirs de stockage 22, 25, quand la coulée du produit 31 est arrêtée grâce à des obturateurs 35 situés sur ladite tête de coulée 19, tel que représentés sur la figure 3. Inversement, quand on veut faire couler ledit produit 31 au travers de la tête de coulée 19 grâce au mélange assuré par exemple soit en cas d'alimentation basse pression par un rotor 39 de type à peignes à l'intérieur de celle-ci, soit par une alimentation directe en haute pression des composants en provenance des circuits 23, 26, on obture les circuits retour par des obturateurs 34 situés vers les réservoirs de stockage 22, 25 respectivement.

La circulation de chacun des composants depuis lesdits réservoirs de stockage dans l'ensemble des circuits, soit en boucle fermée, soit pour être coulé dans le moule 1 à travers la tête de coulée 19, est assurée par des pompes 24 que l'on peut appeler soit de recirculation, soit d'injection ou de coulée : ces pompes 24 alimentent ainsi les circuits 23 et 26, chacune avec un composant donné, à la pression voulue et suivant le débit désiré pour d'une part, assurer un débit total de la tête 19 en produit 31 comme défini précédemment, et d'autre part, une proportion donnée de chaque composant dans le produit 31 : ces caractéristiques de fonctionnement sont contrôlées par un automate de commande 29 qui pilote également le mouvement de la tête 19 grâce aux moteurs d'entraînement du rail de déplacement 21 et de celle-ci.

Dans lesdits réservoirs 22 et 25 de stockage, des systèmes de chauffage 28 permettent de maintenir les composants à la température voulue pour chacun, et qui est contrôlée également par ledit automate de commande 29, suivant une programmation déterminée, en fonction des composants utilisés pour le produit souhaité, ce qui permet d'obtenir dans des conditions optimales les caractéristiques voulues du produit final ; celui-ci après avoir été coulé dans les alvéoles 30, tel que représenté sur la figure 3, en vue de coupe suivant la figure 2 d'un moule complet 1, s'expanse progressivement depuis le début de la coulée jusqu'à la fin de la coulée, et après la fermeture du couvercle 9, tel que décrit précédemment.

En plus de cet automate 29 de commande de la tête 19 et de tous ses équipements associés, le dispositif suivant l'invention peut comporter différents capteurs de mesure physique et de positionnement associés aux équipements mécaniques assurant les différentes opérations de transferts de moule et de déplacements de tous les éléments du dispositif mobiles, autour et sur le carrousel 10, tel que :
- le système d'entraînement 13 de celui-ci, par exemple par un système de roue à friction placé en dessous,
- un capteur 14 de positionnement dudit carrousel avec un système de blocage de celui-ci quand chacun des moules 1 en rotation a atteint la position de travail du poste suivant,
- différents capteurs de contrôle 17 des différents moyens 12 de manoeuvre ainsi que de la position des couvercles 9 pour en vérifier la position...
- des capteurs de température des moules 1 pour piloter un système non représenté ici de réchauffage continu à partir de pompes de circulation et au moins d'un réservoir de liquide maintenu à température donnée et de préférence de faible inertie pour pouvoir mieux régler les températures des moules qui doivent être maintenues dans une fourchette de 58 à 62°C nécessaire à la bonne expansion des mousses à l'eau, grâce à des échangeurs situés dans les couvercles et les semelles des moules 1.

L'ensemble de ces capteurs et dispositifs de contrôle peut être relié à un automate 16, qui est à la fois donc de contrôle et de commande, suivant une programmation prédéterminée pour assurer la présentation de chaque moule 1 successivement à chaque poste de travail ou d'attente, suivant une cadence et pendant un temps donné ; les deux automates 16 et 29, tels que définis précédemment, sont de préférence reliés pour travailler bien sûr en coordination sans intervention extérieure, et peuvent même être constitués d'un seul automate centralisateur.

Un seul opérateur peut alors être prévu près du poste 4 où les éléments de coussins terminés peuvent être évacués sur un système d'évacuation 8 par cet opérateur, bien que cette opération pourrait être réalisée également d'une manière automatique, mais un tel opérateur est cependant préférable pour contrôler l'état des éléments 7 de coussins ou de matelas en fin de fabrication ; de plus, cet opérateur peut disposer d'une pédale de sécurité 15 qu'il garde enfoncée tant qu'il se trouve à son poste, et qui, s'il quitte ce poste, permet le blocage de l'ensemble du dispositif et la mise en attente de certains équipements, ce qui constitue une garantie de sécurité.

## Revendications

1. Procédé de fabrication d'éléments (7) de coussins et de matelas réalisés en matière cellulaire souple à cellules ouvertes, par la coulée dans un moule (1), à partir d'une tête (19) assurant le mélange d'au moins deux composants de base, du produit (31) ainsi formé et qui par réaction de ses composants, s'expanse et remplit tout le volume dudit moule constituant ladite matière cellulaire, tel que :
- on dispose sur un carrousel (10) circulaire au moins cinq emplacements de moules (1) comportant plusieurs alvéoles creuses (30) débouchant à leur partie supérieure dans un volume commun permettant de constituer une semelle continue desdits coussins et matelas;
- on transfère automatiquement, successivement et horizontalement par ledit carrousel (10) lesdits moules depuis un poste (5) de préparation où on projette sur toute leur surface un agent démoulant, pour le présenter sous ladite tête (19);
- on déplace par tout moyen mécanique (20, 21) ladite tête au-dessus de chaque moule (1) suivant un tracé continu (33) couvrant au moins toutes les alvéoles de celui-ci et à une vitesse variable suivant les parties du tracé et assurant, d'une part, pour un débit donné de coulée du produit (31), une répartition voulue de celui-ci dans chaque alvéole, et d'autre part, un temps total de parcours du tracé (33) inférieur au temps d'expansion maximum du produit projeté en début de ce tracé;
- on ferme un couvercle (9) sur ledit moule (1), après la fin du parcours de la tête (19) sur le tracé (33), et on transfère automatiquement par ledit carrousel (10) le moule ainsi fermé vers des postes d'attente (2, 3) où il demeure ainsi pendant un temps au moins égal à celui de la maturation de la matière cellulaire obtenue;
- on ouvre ledit couvercle (9), on enlève l'élément (7) de coussins ou matelas ainsi constitué et on vérifie la propreté du moule (1) et on recommence les opérations ci-dessus pour réaliser un autre élément à partir du poste (5) de préparation.

2. Procédé de fabrication d'éléments (7) de coussins et de matelas suivant la revendication 1, caractérisé en ce que, après le poste de projection (5) de l'agent démoulant, et avant le transfert du moule (1) sous la tête de coulée (19), on déplace ce moule automatiquement par ledit carrousel (10) vers un poste (6), où on projette uniformément sur toute sa surface une peinture imperméable, sur laquelle la matière cellulaire souple obtenue par expansion du produit (31) pourra adhérer.

3. Procédé de fabrication d'éléments (7) de coussins et de matelas suivant l'une quelconque des revendications 1 et 2, caractérisé en ce qu'on alimente ladite tête (19) de coulée en composants de base, par au moins deux circuits (23 et 26) indépendants, dans lesquels lesdits composants sont recyclés en boucle continue depuis des réservoirs de stockage (22, 25), quand on arrête la coulée du produit (31).

4. Procédé de fabrication d'éléments (7) de coussins et de matelas suivant l'une quelconque des revendications 1 à 3, caractérisé en ce que :
- on équipe le carrousel (10) de transfert de moules et les équipements mécaniques assurant les différentes opérations de déplacement de tout dispositif mobile, ainsi que de coulée, de recyclage, de stockage des composants et de tout produit à projeter, de capteurs de mesure physique et de position, que l'on relie à au moins un automate (16, 29) de commande des divers équipements concernés;
- on programme ledit automate pour assurer les opérations de fabrication concernant au moins le déplacement et le transfert du moule (1) entre chaque poste de travail en respectant les temps minima imposés entre chaque poste, et la coulée du produit (31) en respectant le temps maximum imposé, d'une manière automatique et continue.

5. Dispositif de fabrication d'éléments (7) de coussins et de matelas réalisés en matière cellulaire souple à cellules ouvertes obtenue par la coulée d'un mélange d'au moins deux composants de base dans un moule (1), comprenant une tête (19) et un moyen mécanique (20, 21) de déplacement de ladite tête (19) au-dessus dudit moule (1) et assurant ledit mélange et ladite coulée du produit (31) ainsi formé, qui par réaction de ses composants, s'expanse et remplit tout le volume dudit moule constituant ladite matière cellulaire, et un moyen de transfert (10) dudit moule (1) entre un poste (5) de préparation et un poste (36) situé sous ladite tête (19), et des moyens de manoeuvre (12) d'un couvercle (9) pour fermer celui-ci sur le moule (1), le maintenir fixe pendant un temps supérieur à celui de la maturation de la matière cellulaire obtenue, puis pour le réouvrir, caractérisé en ce que :
- il comporte un carrousel (10) circulaire tournant autour d'un axe central vertical (11) et comprenant au moins cinq emplacements de moules (1) comportant plusieurs alvéoles creuses (30) débouchant à leur partie supérieure dans un volume commun permettant de constituer une semelle continue desdits coussins et matelas, lequel carrousel assurant le déplacement desdits moules entre au moins le poste (36) de coulée du produit (31), un poste (4) où l'élément (7) de coussin et de matelas réalisés peut être enlevé du moule et un poste (4, 5) de préparation ou est projeté un agent démoulant sur toute la surface du moule (1), lesquels emplacements étant disposés régulièrement en couronne pour occuper en même temps au moins tous les postes considérés, puis l'un après l'autre, lors de chaque pas de rotation dudit carrousel (10);
- ledit moyen mécanique (20, 21) déplace ladite tête (19) suivant un tracé continu (33) couvrant au moins toutes les alvéoles du moule et à une vitesse assurant, d'une part, pour un débit donné de coulée du produit (31) une répartition voulue de celui-ci, et d'autre part, un temps total de parcours du tracé (33) inférieur au temps d'expansion maximum du produit projeté en début de ce tracé.

6. Dispositif de fabrication d'éléments (7) de coussins et de matelas suivant la revendication 5, caractérisé en ce qu'il comprend un poste de travail (6), de plus entre celui (5) de préparation pour la projection de l'agent démoulant et celui (36) de la coulée du produit (31), et où est projeté uniformément sur toute la surface du moule qui est transféré, une peinture imperméable, sur laquelle la matière cellulaire souple obtenue par expansion du produit (31) peut adhérer.

7. Dispositif de fabrication d'éléments suivant l'une quelconque des revendications 5 à 6, caractérisé en ce que ledit moyen mécanique (20, 21) de déplacement de la tête de coulée (19) est constituée de deux ensembles perpendiculaires d'au moins deux rails parallèles, dont un ensemble est fixe et recouvre le moyen de transfert (10) du moule (1) de part et d'autre de la position de celui-ci, et l'autre ensemble motorisé par rapport au premier, se déplace le long de celui-ci et porte lui-même ladite tête (19) également motorisée et se déplaçant longitudinalement par rapport à ce deuxième ensemble.

8. Dispositif de fabrication suivant l'une quelconque des revendications 5 à 7, caractérisé en ce qu'il comporte deux circuits (23, 26) indépendants, dans lesquels lesdits composants sont recyclés en boucle continue entre ladite tête de coulée (19) et les réservoirs de stockage (22, 25) quand la coulée du produit (31) est arrêtée grâce à des obturateurs (35) situés sur ladite tête de coulée (19).

9. Dispositif de fabrication suivant l'une quelconque des revendications 5 à 8, caractérisé en ce qu'il comporte un système de réchauffage continu des moules (1), à partir de pompes de circulation et d'au moins un réservoir de liquide maintenu à température donnée et de faible inertie, alimentant des échangeurs situés dans les couvercles et les semelles des moules (1) qui sont maintenus à une température située entre 58 et 62°C.

10. Dispositif de fabrication suivant l'une quelconque des revendications 5 à 9, caractérisé en ce qu'il comporte des capteurs de mesures physiques et de positionnement associés au carrousel (10) de transfert de moules et aux équipements mécaniques assurant les différentes opérations de déplacement de tout dispositif mobile ainsi que de coulée, de recyclage, de stockage des composants et de tout produit à projeter, et au moins un automate (16, 29) de commande des divers équipements concernés, auxquels il est relié ainsi qu'à l'ensemble desdits capteurs, est programmé pour assurer toutes les fonctions de ces dits équipements suivant les procédés de l'une quelconque des revendications 1 à 4.

## Claims

1. Process for manufacturing elements (7) of cushions and mattresses made of supple, open-cell cellular material, by casting in a mould (1), from a head (19) ensuring mixture of at least two basic components, the product (31) thus formed and which, by reaction of its components, expands and fills the whole volume of said mould, constituting said cellular material, such that:
- at least five moulds (1) are located on a circular carrousel (10), comprising a plurality of hollow recesses (30) opening out in their upper part in a common volume constituting a continuous sole for said cushions and mattresses;
- said moulds are automatically transferred, successively and horizontally by said carrousel (10) from a preparation station (5) where a demoulding agent is projected over the whole of their surface, to present it beneath said head (19);
- said head is displaced by any mechanical means (20, 21) above each mould (1) in a continuous path (33) covering at least all the recesses thereof at a speed which varies depending on the parts of the path and ensuring, on the one hand, for a given flowrate of casting of the product (31), a desired distribution thereof in each recess, and, on the other hand, a total time of passage over the path (33) less than the maximum time of expansion of the product projected at the beginning of this path;
- a cover (9) is closed on said mould (1), after the end of passage of the head (19) over the path (33), and the mould thus closed is transferred automatically by said carrousel (10) towards standby stations (2, 3) where it remains thus for a time at least equal to that of maturing of the cellular matter obtained;
- said cover (9) is opened, the cushion or mattress element (7) thus constituted is removed and the cleanliness of the mould (1) is checked and the above operations are then recommenced to product another element from the preparation station (5).

2. Process for manufacturing cushion and mattress elements (7) according to Claim 1, characterized in that, after the station (5) where demoulding agent is projected, and before transfer of the mould (1) beneath the casting head (19), this mould is automatically displaced by said carrousel (10) towards a station (6) where a water-proof paint is uniformly projected over the whole of its surface, on which impermeable paint the supple cellular matter obtained by expansion of the product (31) may adhere.

3. Process for manufacturing cushion and mattress elements (7) according to either one of Claims 1 and 2, characterized in that said casting head (19) is supplied with basic components via at least two independent circuits (23 and 26), in which said components are recycled in a continuous loop from storage reservoirs (22, 25), when casting of the product (31) is stopped.

4. Process for manufacturing cushion and mattress elements (7) according to any one of Claims 1 to 3, characterized in that:
- the mould-transfer carrousel (10) and the mechanical elements performing the different operations of displacement of any mobile device, and of casting, recycling, storing the components and any product to be projected, are fitted with physical measuring and position sensors, which are connected to at least one automat (16, 29) for controlling the various equipment concerned;
- said automat is automatically and continuously programmed to perform the manufacturing operations concerning at least the displacement and transfer of the mould (1) between each work station, respecting the minimum times imposed between each station, and the casting of the product (31), respecting the maximum time imposed.

5. Device for manufacturing cushion and mattress elements (7) made of supple, open-cell cellular matter obtained by casting a mixture of at least two basic components in a mould (1), comprising a head (19) and a mechanical means (20, 21) for displacing said head (19) above said mould and ensuring said mixture and said casting of the product (31) thus formed, which, by reaction of its components, expands and fills the whole volume of said mould constituting said cellular matter, and a means (10) for transferring said mould (1) between a preparation station (5) and a station (36) located beneath said head (19), and means (12) for manoeuvring a cover (9) to close it on the mould (1), maintain it fixed for a time greater than that of maturing of the cellular matter obtained, then for re-opening it, characterized in that:
- it comprises a circular carrousel (10) rotating about a vertical central pin (11) and comprising at least five mould locations (1) comprising a plurality of hollow recesses (30) opening out in their upper part in a common volume constituting a continuous sole of said cushions and mattresses, said carrousel ensuring displacement of said moulds between at least the product (31) casting station (36), a station (4) where the cushion and mattress element (7) produced may be removed from the mould and a preparation station (4, 5) where a demoulding agent is projected over the whole surface of the mould (1), which mould locations are disposed regularly in a ring to occupy at the same time at least all the stations in question, then one after the other, upon each step of rotation of said carrousel (10);
- said mechanical means (20, 21) displaces said head (19) along a continuous path (33) covering at least all the recesses of the mould and at a speed ensuring, on the one hand, for a given flowrate of casting of the product (31), a desired distribution thereof, and, on the other hand, a total time of passage over the path (33) less than the maximum expansion time of the product projected at the beginning of this path.

6. Device for manufacturing cushion and mattress elements (7) according to Claim 5, characterized in that it further comprises one more work station (6) between the preparation station (5) for projecting the demoulding agent and the one (36) for casting the product (31), and where there is uniformly projected over the whole surface of the mould which is transferred, a water-proof paint on which the supple cellular matter obtained by expansion of the product (31) may adhere.

7. Device for manufacturing elements according to either one of Claims 5 or 6, characterized in that said mechanical means (20, 21) for displacing the casting head (19) is constituted by two perpendicular assemblies of at least two parallel rails, of which one assembly is fixed and overlaps the mould (1) transfer means (10) on either side of the position thereof, and the other assembly, motorized with respect to the first, moves therealong and itself bears said head (19), likewise motorized and moving longitudinally with respect to this second assembly.

8. Device according to any one of Claims 5 to 7, characterized in that it comprises two independent circuits (23, 26), in which said components are reycled in a continuous loop between said casting head (19) and the storage reservoirs (22, 25) when casting of the product (31) is stopped thanks to obturators (35) located on said casting head (19).

9. Device for manufacture according to any one of Claims 5 to 8, characterized in that it comprises a system for continuously reheating the moulds (1), from circulating pumps and at least one reservoir of liquid maintained at a given temperature and of low inertia, supplying exchangers located in the covers and soles of the moulds (1) which are maintained at a temperature lying between 58 and 62°C.

10. Device for manufacture according to any one of Claims 5 to 9, characterized in that it comprises physical measurement and positioning sensors associated with the mould-transfer carrousel (10) and with the mechanical equipment performing the different operations of displacement of any mobile device and of casting, recycling, storing the components and any product to be projected, and at least one automat (16, 29) for controlling the various equipment concerned, to which it is connected as well as to the assembly of said sensors, is programmed to perform all the functions of said equipment in accordance with the processes of any one of Claims 1 to 4.

## Patentansprüche

1. Verfahren zur Herstellung von Polster- und Matratzenelementen (7) aus weichem, zellularen, offenzelligen Material durch gießen, und zwar von einem Kopf (19) aus, der die Vermischung mindestens zweier Grundbestandteile sicherstellt, des so hergestellten Produkts (31) in eine Gußform (1), welches Produkt sich durch Reaktion seiner Bestandteile ausdehnt und den ganzen Raum der Gußform ausfüllt und das zellulare Material bildet, wie:
- an einem kreisförmigen Karussell (10) werden mindestens fünf Plätze für Gußformen (1) vorgesehen, die mehrere Hohlräume (30) umfassen, die in ihrem oberen Bereich in einen gemeinsamen Raum münden, der geeignet ist, eine durchgehende Unterlage für die Kissen und Matratzen zu bilden;
- die Gußformen werden von dem Karussell (10) automatisch, nacheinander und horizontal von einer Vorbereitungsstation (5), an der deren ganze Oberfläche mit einem Trennmittel bespritzt wird, unter den Kopf (19) befördert;
- der Kopf wird mit einer beliebigen mechanischen Vorrichtung (20, 21) auf einer durchgehenden Bahn (33) über die jeweilige Gußform (1) geführt, die mindestens über alle ihre Hohlräume führt, und zwar mit einer je nach Bahnabschnitt variablen Geschwindigkeit, wobei einerseits bei einer gegebenen Menge gegossenen Produkts (31) eine beliebige Verteilung desselben in jedem Hohlraum und andererseits eine Gesamtdurchlaufzeit der Strecke (33) gewährleistet ist, die unter der maximalen Ausdehnzeit des am Anfang dieser Strecke aufgespritzten Produkts liegt;
- über der Gußform (1) wird nach dem Ende der von dem Kopf (19) zurückgelegten Strecke (33) ein Deckel (9) geschlossen, und die so geschlossene Gußform wird automatisch zu Bereitstellungsstationen (2, 3) befördert, wo sie so zumindest während einer Zeit verbleibt, die der Aushärtung des entstandenen zellularen Materials entspricht;
- der Deckel (9) wird geöffnet, das so hergestellte Kissen- oder Matratzenelement (7) wird herausgenommen, die Sauberkeit der Gußform (1) überprüft, und die vorgenannten Schritte werden zur Herstellung eines weiteren Elements von der Vorbereitungsstation (5) aus wiederholt.

2. Verfahren zur Herstellung von Polster- und Matratzenelementen (7) nach Anspruch 1, dadurch gekennzeichnet, daß die Gußform (1) nach der Station (5), an der das Trennmittel aufgespritzt wird, und vor ihrer Beförderung unter den Gußkopf (19) von dem Karussell (10) zu einer Station (6) bewegt wird, an der auf ihre gesamte Oberfläche gleichmäßig eine wasserundurchlässige Farbe aufgetragen wird, an der das weiche, zellulare, durch Ausdehnung des Produkts (31) entstandene Material haften kann.

3. Verfahren zur Herstellung von Polster- und Matratzenelementen (7) nach einem der Ansprüche 1 und 2, dadurch gekennzeichnet, daß der Gußkopf (19) über mindestens zwei getrennte Leitungen (23 und 26) mit Grundbestandteilen versorgt wird, in denen diese Bestandteile in einem geschlossenen Kreislauf von Lagerbehältern (22, 25) aus wiederverwertet werden, wenn das Gießen des Produkts (31) beendet ist.

4. Verfahren zur Herstellung von Polster- und Matratzenelementen (7) nach einem der Ansprüche 1 bis 3, dadurch gekennzeichnet, daß:
- das Karussell (10) zum Transport der Gußformen und die mechanischen Ausrüstungen, welche die einzelnen Transporte beliebiger beweglicher Vorrichtungen wie auch der Guß-, Recycling-, Bestandteile-Lagervorrichtungen und der Vorrichtung zum Auftragen beliebiger Produkte vornimmt, mit physikalischen und Positions-Meßwertgebern ausgestattet werden, die mit mindestens einer Steuerung (16, 29) für die diversen entsprechenden Ausrüstungen verbunden werden,
- man die Steuerung so programmiert, daß sie die Herstellungsschritte, die zumindest das Versetzen und den Transport der Gußform (1) zwischen den einzelnen Arbeitsstationen betreffen, übernimmt und dabei die für die Zeit zwischen den Stationen vorgeschriebenen Mindestzeiten einhält, sowie das automatische und ununterbrochene Gießen des Produkts (31) unter Einhaltung der vorgeschriebenen Höchstzeit.

5. Vorrichtung zur Herstellung von Polster- und Matratzenelementen (7) aus zellularem, weichen, offenzelligen Material, das durch Gießen eines Gemischs aus mindestens zwei Grundbestandteilen in eine Gußform (1) erhalten wurde, die einen Kopf (19) und eine mechanische Vorrichtung (20, 21) umfaßt, die den Kopf (19) über die Gußform (1) bewegt und die Vermischung und das Gießen des so entstandenen Produkts (31) sicherstellt, das sich durch Reaktion seiner Bestandteile ausdehnt und den ganzen Raum der Gußform ausfüllt und das zellulare Material bildet, sowie eine Fördervorrichtung (10) für die Gußform (1) zwischen einer Vorbereitungsstation (5) und einer Station (36), die sich unter dem Kopf (19) befindet, und Handhabungsvorrichtungen (12) für einen Deckel (9), um diesen über der Gußform (1) zu schließen und ihn während einer Zeit fest an seinem Platz zu halten, die länger ist als die des Aushärtens des erhaltenen zellularen Materials, und ihn dann wieder zu öffnen, dadurch gekennzeichnet, daß:
- sie ein kreisförmiges Karussell (10) umfaßt, das um eine vertikale Mittelachse (11) dreht und mindestens fünf Plätze für Gußformen (1) umfaßt, die mehrere Hohlräume (30) umfassen, die in ihrem oberen Bereich in einen gemeinsamen Raum münden, der geeignet ist, eine durchgehende Unterlage für die Kissen und Matratzen zu bilden, welches Karussell für das Versetzen der Gußformen zwischen mindestens der Station (36) zum Gießen des Produkts (31), einer Station (4), in der das Kissen- bzw. Matratzenelement (7) aus der Gußform entfernt werden kann, sowie einer Vorbereitungsstation (4, 5), in der auf die gesamte Oberfläche der Gußform (1) ein Trennmittel aufgespritzt wird, sorgt, welche Plätze ringförmig in gleichmäßigem Abstand angeordnet sind, um gleichzeitig und dann nacheinander bei jedem Drehschritt des Karussells (10) mindestens alle betrachteten Stationen zu besetzen;
- die mechanische Vorrichtung (20, 21) den Kopf (19) auf einer durchgehenden Bahn (33), die mindestens über alle ihre Hohlräume mit einer Geschwindigkeit führt, die einerseits für eine gegebene Menge gegossenen Produkts (31) eine beliebige Verteilung desselben in jedem Hohlraum und andererseits eine Gesamtdurchlaufzeit der Bahn (33) gewährleistet, die unter der maximalen Ausdehnzeit des am Anfang dieser Bahn aufgespritzten Produkts liegt.

6. Vorrichtung zur Herstellung von Polster- und Matratzenelementen (7) nach Anspruch 5, dadurch gekennzeichnet, daß sie eine Arbeitsstation (6) umfaßt, zusätzlich zu der Vorbereitungsstation (5) zum Aufbringen des Trennmittels und der (36) zum Gießen des Produkts (31), in der gleichmäßig auf die gesamte Oberfläche der Gußform, die befördert wird, eine wasserundurchlässige Farbe aufgespritzt wird, an der das weiche, zellulare, durch Ausdehnung des Produkts (31) entstandene Material haften kann.

7. Vorrichtung zur Herstellung von Polster- und Matratzenelementen (7) nach einem der Ansprüche 5 bis 6, dadurch gekennzeichnet, daß die mechanische Vorrichtung (20, 21) zum Bewegen des Gußkopfes (19) aus zwei vertikalen Einheiten aus mindestens zwei parallel angeordneten Schienen besteht, wovon eine Einheit feststeht und die Fördervorrichtung (10) für die Gußform (1) beidseits ihrer Position bedeckt, und die andere, motorisierte Einheit sich entlang der ersten bewegt und selbst den Kopf (19) trägt, der ebenfalls motorisiert ist und sich, bezogen auf diese zweite Einheit, der Länge nach bewegt.

8. Herstellungsvorrichtung nach einem der Ansprüche 5 bis 7, dadurch gekennzeichnet, daß sie zwei getrennte Kreisläufe (23, 26) umfaßt, in denen die Grundbestandteile in einem geschlossenen Kreislauf zwischen dem Gußkopf (19) und den Lagerbehältern (22, 25) wiederverwertet werden, wenn das Gießen des Produkts (31) mit Hilfe von Absperrvorrichtungen (35) beendet wird, die sich an dem Gußkopf (19) befinden.

9. Herstellungsvorrichtung nach einem der Ansprüche 5 bis 8, dadurch gekennzeichnet, daß sie eine Einrichtung zum dauerhaften Erwärmen der Gußformen (1) von Umlaufpumpen und mindestens einem Flüssigkeitsbehälter aus umfaßt, der auf einer gegebenen Temperatur gehalten wird, eine geringe Trägheit aufweist und die in den Deckeln und Sohlen der Gußformen (1) angeordneten Wärmetauscher versorgt, die auf einer Temperatur von 58 bis 62°C gehalten werden.

10. Herstellungsvorrichtung nach einem der Ansprüche 5 bis 9, dadurch gekennzeichnet, daß sie physikalische und Positionierungs-Meßwertgeber umfaßt, die mit dem Karussell (10) für den Transport der Gußformen und mit den mechanischen Ausrüstungen verbunden werden, welche die einzelnen Vorgänge zum Transport beliebiger beweglicher Vorrichtungen wie auch der Guß-, Recycling-, Bestandteile-Lagervorrichtungen und Vorrichtungen zum Auftragen beliebiger Produkte übernehmen, sowie mindestens eine Steuerung (16, 29) zur Steuerung der diversen betroffenen Ausrüstungen, mit denen sie ebenso wie mit allen Meßwertgebern verbunden ist, die so programmiert wird, daß sie alle Funktionen dieser Ausrüstungen entsprechend den Verfahren eines der Ansprüche 1 bis 4 übernehmen kann.
